(19) Europäisches Patentamt
European Patent Office
Office européen des brevets

(11) EP 1 452 422 A1

(12) **DEMANDE DE BREVET EUROPEEN**

(43) Date de publication:
**01.09.2004 Bulletin 2004/36**

(51) Int Cl.[7]: **B62D 15/02**, G01D 18/00, G01D 21/02

(21) Numéro de dépôt: **04290519.0**

(22) Date de dépôt: **25.02.2004**

(84) Etats contractants désignés:
**AT BE BG CH CY CZ DE DK EE ES FI FR GB GR HU IE IT LI LU MC NL PT RO SE SI SK TR**
Etats d'extension désignés:
**AL HR LT LV MK**

(30) Priorité: **25.02.2003 FR 0302301**

(71) Demandeur: **Renault s.a.s.**
**92100 Boulogne Billancourt (FR)**

(72) Inventeurs:
- **Croguennec, Gurvan**
  **78000 Versailles (FR)**
- **Guichart, Laurent**
  **78460 Chevreuse (FR)**
- **Quiot, Jean-Marc**
  **92100 Boulogne (FR)**

(74) Mandataire: **Davies, Owen Robert Treharne et al**
**Renault Technocentre,**
**Service 0267 TCR GRA 1 55,**
**1 Avenue du Golf**
**78288 Guyancourt (FR)**

(54) **Système et procédé de détermination de la position angulaire d'un volant de véhicule automobile**

(57) Ce système de détermination de la position angulaire d'un volant (4) de véhicule automobile (1) comporte un capteur (3) apte à mesurer la position angulaire du volant (4) modulo 2Π radians, et des moyens pour déterminer le nombre de tours effectués par le volant. Il comporte également un calculateur (2) adapté pour calculer la position angulaire du volant (4) à partir de la position angulaire modulo 2Π fournie par le capteur (3) et du nombre relatif de tours effectués par le volant (4).

FIG.1

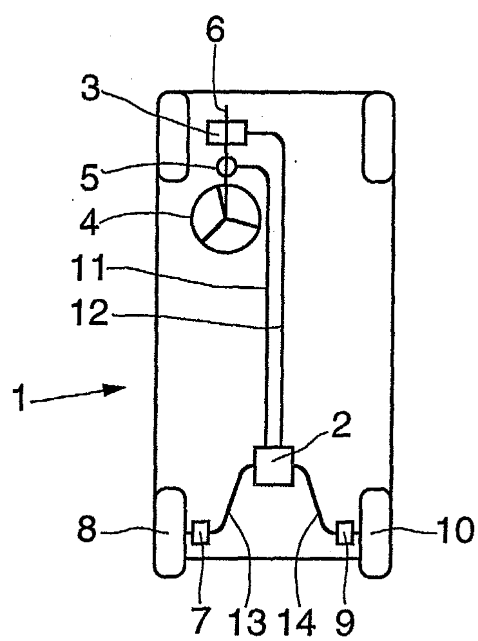


EP 1 452 422 A1

## Description

La présente invention concerne un système et un procédé de détermination de la position angulaire d'un volant et en particulière d'un volant de véhicule automobile.

La position angulaire d'un volant de véhicule automobile est nécessaire à de multiples applications embarquées sur les véhicules automobiles, comme les dispositifs électroniques de stabilité ou ESP, pour lesquelles il faut déterminer la position angulaire du volant en tenant compte de l'indice du nombre de tours effectués par le volant, ce que l'on nomme angle absolu multi-tours, et ce dans un délai aussi court que possible.

On a déjà imaginé diverses solutions pour estimer ou calculer cette position angulaire réelle du volant d'un véhicule automobile.

Certaines solutions proposent des capteurs multi-tours, capables de fournir cette position angulaire multi-tours du volant. C'est ainsi que la demande de brevet français N°2800347 propose un système à intégrer dans un capteur d'angle qui permet de repérer l'indice du tour dans lequel se trouve le volant.

Ces solutions apparaissent coûteuses et souvent bruyantes.

D'autres solutions proposent une initialisation de la position angulaire du volant donnée par un capteur mono-tour, à partir des capteurs de vitesses de roues.

Le brevet US 4803629 initialise la position angulaire du volant lorsque la vitesse du véhicule est supérieure à un seuil, et considère alors que la position angulaire du volant est nécessairement comprise entre -180° et +180°.

Cette solution ne permet pas de disposer d'informations sur la position angulaire du volant pour des vitesses du véhicule inférieures à la vitesse de seuil. En outre, l'information, lorsqu'elle est disponible, n'est pas fiable, car il peut exister des situations pour lesquelles l'ESP a besoin de connaître la valeur exacte de la position angulaire du volant, qui peut être supérieure à un demi-tour même à vitesse élevée du véhicule, supérieure à la vitesse de seuil.

Le brevet US 6082171 propose de détecter, à partir des vitesses des roues, le moment où les roues sont en position de ligne droite, et alors d'initialiser la position angulaire du volant à zéro.

Cette solution ne permet pas de connaître la position angulaire du volant tant que celui-ci n'est pas passé par sa position centrée, or cela peut être trop tard dans certaines situations comme des départs avec le volant braqué.

Le brevet EP 0460582 estime la position angulaire du volant à partir des vitesses des roues avants.

Cette solution présente des inconvénients majeurs. En effet, les roues avants sont souvent dans des situations dans lesquelles l'estimation n'est pas possible, et le calcul à partir des roues avants est nettement plus sensible aux erreurs de mesure. De plus la formule d'estimation n'est valable qu'autour de la position centrée du volant, ce qui rend l'estimation impossible ou non fiable lors de départs avec le volant braqué par exemple.

La demande de brevet Français N°2811077 détecte, à partir de données sur les roues directrices, que la position angulaire du volant est comprise entre -180° et +180°, et initialise alors la position angulaire du volant.

Cette solution rend impossible l'initialisation de la position angulaire du volant lors d'un démarrage avec un volant braqué de plus d'un demi-tour, durant un temps indéterminé, tant que le volant n'est pas revenu dans une situation détectable. De plus, le calcul de la position angulaire du volant à partir des roues avants est nettement plus sensible aux erreurs de mesure.

Le document EP-0353995 porte sur un détecteur d'angle de rotation d'un volant de direction de véhicule automobile. Le détecteur est lié à un capteur d'angle de rotation du volant de direction. Le système permet de corriger la valeur de sortie du capteur d'angle en fonction d'une erreur entre l'angle mesuré et de l'angle prévu. L'angle prévu est calculé par des moyens de prévision d'angle à partir d'un gain de rotation G dépendant de la vitesse mesurée du véhicule et d'un taux d'embardée R.

Ces solutions ne permettent donc pas une estimation fiable et rapide en toutes circonstances de la position angulaire du volant.

L'invention a pour objet de déterminer la position angulaire du volant sans utiliser de capteur absolu multi-tours.

Le système selon l'invention détermine la position angulaire d'un volant de véhicule automobile. Le système comporte un capteur apte à mesurer la position angulaire du volant modulo $2\Pi$ radians, des moyens pour déterminer le nombre de tours effectués par le volant, et un calculateur adapté pour calculer la position angulaire du volant à partir de la position angulaire modulo $2\Pi$ fournie par le capteur et du nombre relatif de tours effectués par le volant.

Dans un premier mode de réalisation, le capteur est un capteur absolu mono-tour.

Dans un mode réalisation préféré, le calculateur est raccordé à des moyens de mesure des vitesses de rotation des roues arrières pour calculer la position angulaire du volant en fonction desdites vitesses de rotation des roues arrières selon la relation suivante:

$$\alpha_{volant} = dem \times \arctan\left[\frac{2L}{E}\left(\frac{\omega_{2ext} - \omega_{2int}}{\omega_{2ext} + \omega_{2int}}\right)\right]$$

dans laquelle :

$\alpha_{volant}$ : position angulaire du volant, en radians
dem : rapport de démultiplication entre le volant et les roues directrices
L : empattement du véhicule, en mètres
E : voie du véhicule, en mètres
$\omega_{2ext}$ : vitesse de rotation de la roue arrière extérieure, en radians/seconde
$\omega_{2int}$ : vitesse de rotation de la roue arrière intérieure, en radians/seconde

Dans un mode de réalisation avantageux, le capteur absolu mono-tour et un dispositif de serrage de la colonne de direction sont reliés au calculateur par des moyens de communication. Cela permet de synchroniser l'activation et la désactivation du capteur sur des trames de données émises par le dispositif de serrage de la colonne de direction, et de calculer le nombre relatif de tours effectués par le volant, à partir d'une trame de données transmise au calculateur par le dispositif de serrage de la colonne de direction.
Dans un autre mode de réalisation, le capteur est un capteur relatif qui possède des moyens pour repérer une position de référence acquise lors de la rotation du volant.
Dans un mode de réalisation préféré, le calculateur est raccordé à des moyens de mesure des vitesses de rotation des roues arrières pour calculer la position angulaire du volant en fonction desdites vitesses de rotation des roues arrières selon la relation suivante:

$$\alpha_{volant} = dem \times \arctan\left[\frac{2L}{E}\left(\frac{\omega_{2ext} - \omega_{2int}}{\omega_{2ext} + \omega_{2int}}\right)\right]$$

dans laquelle :

$\alpha_{volant}$ : position angulaire du volant, en radians
dem : rapport de démultiplication entre le volant et les roues directrices
L : empattement du véhicule, en mètres
E : voie du véhicule, en mètres
$\omega_{2ext}$ : vitesse de rotation de la roue arrière extérieure, en radians/seconde
$\omega_{2int}$ : vitesse de rotation de la roue arrière intérieure, en radians/seconde

Dans un mode de réalisation avantageux, le capteur relatif et un dispositif de serrage de la colonne de direction sont reliés au calculateur par des moyens de communication pour synchroniser l'activation et la désactivation du capteur sur les trames de données émises par le dispositif de serrage de la colonne de direction, et pour calculer le nombre relatif de tours effectués par le volant, à partir d'une trame de données transmise au calculateur par le dispositif de serrage de la colonne de direction.
Le procédé selon l'invention pour la détermination de la position angulaire d'un volant d'un véhicule automobile comporte les étapes consistant à mesurer la position angulaire du volant modulo 2Π au moyen d'un capteur, à déterminer le nombre relatif de tours effectués par le volant, et calculer la position angulaire du volant à partir de la position angulaire du volant modulo 2Π et du nombre relatif de tours effectués par le volant.
Dans un premier mode de mise en oeuvre, on utilise un capteur absolu mono-tour, et on synchronise l'activation et la désactivation du capteur sur des trames de données émises par un dispositif de serrage de la colonne de direction, lesdites trames circulant sur un moyen de communication reliant ledit dispositif de serrage au calculateur.
En outre, on détermine le nombre relatif de tours effectués par le volant en exploitant une trame de données transmise au calculateur par le dispositif de serrage de la colonne de direction.
Avantageusement, en cas de verrouillage du dispositif de serrage de la colonne de direction après la désactivation du capteur, on détermine le numéro relatif du tour dans lequel se trouve le volant à partir des vitesses de rotation des roues arrières du véhicule fournies par les moyens de mesure des vitesses de rotation des roues arrières.

Dans un autre mode de mise en oeuvre, on utilise un capteur relatif, on repère une position de référence connue du capteur relatif lors de la rotation du volant, et l'on synchronise l'activation et la désactivation du capteur sur des trames de données émises par un dispositif de serrage de la colonne de direction au travers de moyens de communication reliant ledit dispositif de serrage au calculateur.

Dans un mode de mise en oeuvre préféré, on détermine le nombre relatif de tours effectués par le volant en exploitant une trame de données transmise au calculateur par le dispositif de serrage de la colonne de direction.

En outre, en cas de verrouillage du dispositif de serrage de la colonne de direction après la désactivation du capteur, on détermine le numéro relatif du tour dans lequel se trouve le volant au moyen des vitesses de rotation des roues arrières du véhicule fournies par les moyens de mesure des vitesses de rotation des roues arrières du véhicule.

Dans un mode de mise en oeuvre avantageux, on détermine une position de référence connue du capteur lors d'une rotation du volant.

En outre, en cas de défaut de détection de position de référence, on active un dispositif d'alerte.

D'autres buts, caractéristiques et avantages de l'invention apparaîtront à la lecture de la description suivante, donnée uniquement à titre d'exemple nullement limitatif, et faite en référence aux dessins annexés sur lesquels :

- la figure 1 est un schéma synoptique d'un système d'estimation de la position angulaire d'un volant de véhicule automobile selon l'invention.
- la figure 2 est un schéma synoptique permettant d'expliquer le principe de l'estimation.
- la figure 3 est un organigramme représentant le fonctionnement du procédé selon l'invention dans un premier mode de mise en oeuvre.
- la figure 4 est un organigramme représentant le fonctionnement du procédé selon l'invention dans un autre mode de mise en oeuvre.

Sur la figure 1, on a représenté l'architecture générale d'un véhicule automobile 1, pourvu d'un système selon l'invention. Le véhicule comporte un calculateur 2, un capteur 3 apte à mesurer la position angulaire du volant 4 modulo $2\Pi$ radians, un dispositif de serrage 5 de la colonne de direction 6, un capteur 7 de vitesse de rotation de la roue arrière gauche 8 du véhicule 1, et un capteur 9 de vitesse de rotation de la roue arrière droite 10 du véhicule 1. Des bus de communication 11, 12, 13, 14 relient respectivement le dispositif de serrage 5 et les capteurs 3, 7 et 9 au calculateur 2.

Le calculateur 2 comporte tous les moyens matériels et logiciels permettant de déterminer la position angulaire du volant 4 au moyen des données dont il dispose. En particulier, le calculateur est apte à estimer la position angulaire du volant 4 à partir des vitesses de rotation angulaires des roues arrières 8 et 10 du véhicule 1, au moyen d'une méthode d'estimation que la figure 2 permet de décrire.

La figure 2 décrit les différentes variables utiles à l'élaboration de la formule d'estimation de la position angulaire du volant 4 à partir des vitesses de rotation des roues arrières 8 et 10 du véhicule 1, c'est-à-dire :

- $C$ : centre de courbure de la trajectoire
- $\dot{\psi}$ : : vitesse de lacet
- $r_{ij}$ : rayon de roulement de la roue ij
- $V_{ij}$ : vitesse linéaire de la roue ij

avec pour convention pour les indices : 1 à l'avant, 2 à l'arrière, ext à l'extérieur et int à l'intérieur par rapport au centre de courbure C. On effectue les hypothèses suivantes :

- H1 : les roues roulent sans glisser
- H2 : on néglige les phénomènes de dérive des pneus

On peut écrire :

$$\tan(\alpha_{roue}) = \frac{L}{R}$$

avec

$$\alpha_{volant} = \alpha_{roue} * dem$$

où *dem* est le rapport de démultiplication entre le volant 4 et les roues avants (fonction connue de la position des roues) on a de plus : $R=\frac{R_{2ext}+R_{2int}}{2}$ et $E= R_{2ext} - R_{2int}$
d'où :

$$\tan\left(\frac{\alpha_{volant}}{dem}\right)=\frac{2L}{R_{2ext}+R_{2\,int}}*\frac{R_{2ext}-R_{2int}}{E}$$

Or

$$V_{ij}=r_{ij}\,\omega_{ij}=R_{ij}\,\dot{\Psi}$$

On a donc :

$$\tan\left(\frac{\alpha_{volant}}{dem}\right)=\frac{2L}{E}\left(\frac{R_{2ext}-R_{2int}}{R_{2ext}+R_{2int}}\right)\text{ et en utilisant }R_{ij}=\frac{r_{ij}\,\omega_{ij}}{\dot{\Psi}}$$

On obtient :

$$\tan\left(\frac{\alpha_{volant}}{dem}\right)=\frac{2L}{E}\left(\frac{r_{2ext}\,\omega_{2ext}-r_{2\,int}\,\omega_{2int}}{r_{2ext}\,\omega_{2ext}+r_{2\,int}\,\omega_{2int}}\right)$$

On introduit le taux de déséquilibre des développées ε : $\varepsilon=\frac{r_{2ext}-r_{2int}}{r_{2ext}+r_{2int}}$ Et l'on obtient :

$$\tan\left(\frac{\alpha_{volant}}{dem}\right)=\frac{2L}{E}\left(\frac{D+\varepsilon}{1+D\varepsilon}\right)\quad\text{avec}\quad D=\frac{\omega_{2ext}-\omega_{2ext}}{\omega_{2ext}+\omega_{2ext}}$$

Or |D| < 1, donc dans le cadre des hypothèses, on commet une erreur inférieure à ε% en prenant :

$$\tan\left(\frac{\alpha_{volant}}{dem}\right)=\frac{2L}{E}\left(\frac{\omega_{2ext}-\omega_{2\,int}}{\omega_{2\,ext}+\omega_{2\,int}}+\varepsilon\right)$$

Or l'incertitude sur le taux de déséquilibre des développées ε, dû au fait que l'on ne connaît pas parfaitement le rayon de roulement des roues arrières conduit à considérer que les deux rayons de roulement des roues arrières sont égaux, et que par conséquent ε=0.
On obtient donc une estimation de la position angulaire du volant 4 par la relation.

$$\alpha_{volant}=dem.\arctan\left[\frac{2L}{E}\left(\frac{\omega_{2ext}-\omega_{2\,int}}{\omega_{2ext}+\omega_{2\,int}}\right)\right]$$

A partir de cette estimation, il est aisé de calculer le numéro relatif du tour dans lequel se trouve le volant 4, par la relation :

$$T_{volant}=\alpha_{volant}/2\Pi$$

avec $T_{volant}$ : numéro relatif du tour dans lequel se trouve le volant

La figure 3 représente un premier mode de mise en oeuvre du procédé selon l'invention utilisant le principe décrit ci-dessus, dans le cas où le volant 4 du véhicule 1 est équipé d'un capteur 3 de type absolu mono-tour. La procédure décrite débute lors du démarrage du véhicule (étape 30). Dès le démarrage, le capteur est capable de fournir un angle modulo $2\Pi$ (étape 31). Dans le cas où le dispositif de serrage 5 de la colonne de direction 6 a été verrouillé avant l'arrêt du véhicule c'est à dire avant la désactivation du capteur 3, le capteur 3 dispose en mémoire du nombre relatif (positif ou négatif suivant le sens de rotation) de tours effectués par le volant 4 par rapport à la position correspondant à un trajet en ligne droite. Ainsi, lors d'une étape 32, le capteur fournit le nombre relatif de tours effectués par le volant 4 au calculateur 2. La position angulaire du volant 4 est alors calculée (étape 35), par le calculateur 2. Par contre, dans le cas où le dispositif de serrage 5 de la colonne de direction 6 n'a pas été verrouillé avant l'arrêt du véhicule, c'est-à-dire dans le cas où la colonne de direction 6 a été verrouillée après la désactivation du capteur 3, le capteur 3 ne peut pas fournir le nombre relatif de tours effectués par le volant 4 au calculateur 2 (étape 33). Dans ce cas, le calculateur 2 détermine le nombre relatif de tours effectués par le volant au moyen des vitesses de rotation des roues arrières 8 et 10, transmises par les capteurs 7 et 9 au calculateur 2, au moyen de la méthode décrite précédemment (étape 34). Le calculateur 2 calcule alors la position angulaire du volant 4 (étape 35).

La figure 4 représente un premier mode de mise en oeuvre du procédé selon l'invention, dans le cas où le volant 4 du véhicule 1 est équipé d'un capteur 3 de type relatif. La procédure décrite débute lors du démarrage du véhicule 1. Avec ce capteur 3 de type relatif, au réveil, l'angle volant modulo $2\Pi$ est inconnu (étape 41). Dans le cas où le dispositif de serrage 5 de la colonne de direction 6 a été verrouillé avant l'arrêt du véhicule, c'est-à-dire avant la désactivation du capteur 3, le capteur 3 dispose en mémoire du nombre relatif de tours effectués par le volant 4. Ce nombre relatif est fourni au calculateur 2 (étape 42). Si le conducteur effectue une rotation du volant, le capteur 3 repère une position de référence qu'il connaît et transmet cette position au calculateur 2 (étape 43). Le calculateur 2, calcule alors la position angulaire du volant 4 (étape 51).

Mais, si après l'étape 42, le véhicule roule à haute vitesse, et qu'alors le conducteur ne tourne pas suffisamment le volant 4, le capteur 3 ne peut pas repérer de position de référence. Le calculateur 2 décide alors que le fonctionnement du système n'est plus sûr (étape 46) et active un dispositif d'alerte, par exemple un voyant de signalisation (étape 47).

Par contre, après l'étape 41, si le dispositif de serrage 5 de la colonne de direction 6 a été verrouillé après l'arrêt du véhicule, c'est-à-dire après la désactivation du capteur 3, le capteur 3 n'a pas été en mesure de mémoriser le nombre relatif de tours effectués par le volant 4. Il en informe le calculateur 2 (étape 44). Le calculateur 2 détermine alors le nombre relatif de tours effectuées par le volant au moyen des vitesses de rotation des roues arrières 8 et 10, transmises par les capteurs 7 et 9 au calculateur 2, au moyen de la méthode décrite précédemment (étape 45). Si ensuite le véhicule roule à haute vitesse, le conducteur ne tourne pas suffisamment le volant 4, le capteur 3 ne peut pas repérer de position de référence connue du capteur relatif 3. Le calculateur 2 détecte alors que le fonctionnement du système n'est plus sûr (étape 46) et active le dispositif d'alerte (étape 47).

Cependant, si après l'étape 45, le conducteur tourne suffisamment le volant 4 pour que le capteur relatif 3 puisse repérer une position de référence qu'il connaît et la transmettre au calculateur 2 (étape 48), le calculateur 2 évalue alors la position angulaire du volant 4 modulo $2\Pi$ (étape 49). Puis, le véhicule se déplaçant à faible vitesse, le calculateur 2 détermine le nombre relatif de tours effectuées par le volant. Ce calcul est effectué au moyen des vitesses de rotation des roues arrières 8 et 10, transmises par les capteurs 7 et 9 au calculateur 2, au moyen de la méthode décrite précédemment (étape 50). Le calculateur 2 calcule alors la position angulaire du volant 4 (étape 51).

L'invention permet donc de mesurer la position angulaire du volant, en remplaçant un capteur absolu multi-tours onéreux, soit par un capteur absolu mono-tour, soit par un capteur relatif. Le coût de détermination de la position angulaire du volant est alors réduit.

De plus, l'invention permet d'avoir une estimation de la position angulaire du volant avant même le démarrage du véhicule.

## Revendications

1. Système de détermination de la position angulaire d'un volant (4) de véhicule automobile (1), **caractérisé en ce qu'**il comporte un capteur (3) apte à mesurer la position angulaire du volant (4) modulo 2II radians, des moyens pour déterminer le nombre de tours effectués par le volant, et un calculateur (2) adapté pour calculer la position angulaire du volant (4) à partir de la position angulaire modulo $2\Pi$ fournie par le capteur (3) et du nombre relatif de tours effectués par le volant (4).

2. Système de détermination selon la revendication 1, **caractérisée en ce que** le capteur (3) est un capteur absolu mono-tour.

**3.** Système de détermination selon la revendication 2, **caractérisé en ce que** le calculateur (2) est raccordé à des moyens de mesure (7,9) des vitesses de rotation des roues arrières (8,10) pour calculer la position angulaire du volant (4) en fonction desdites vitesses de roues selon la relation suivante :

$$\alpha_{volant} = dem \times \arctan\left[\frac{2L}{E}\left(\frac{\omega_{2ext} - \omega_{2\,\mathrm{int}}}{\omega_{2ext} + \omega_{2\,\mathrm{int}}}\right)\right]$$

dans laquelle :

$\alpha_{volant}$ : position angulaire du volant, en radians
dem : rapport de démultiplication entre le volant et les roues directrices
L : empattement du véhicule, en mètres
E : voie du véhicule, en mètres
$\omega_{2ext}$ : vitesse de rotation de la roue arrière extérieure, en radians/s
$\omega_{2int}$ : vitesse de rotation de la roue arrière intérieure, en radians/s

**4.** Système de détermination selon la revendication 2 ou 3, **caractérisé en ce que** le capteur (3) absolu mono-tour et un dispositif de serrage (5) de la colonne de direction (6) sont reliés au calculateur (2) par des moyens de communication (11,12) pour synchroniser l'activation et la désactivation du capteur (3) sur des trames de données émises par le dispositif de serrage (5) de la colonne de direction (6), et pour calculer le nombre de tours effectués par le volant (4), à partir d'une trame de données transmise au calculateur (2) par le dispositif de serrage (5) de la colonne de direction (6).

**5.** Système de détermination selon la revendication 1, **caractérisée en ce que** le capteur (3) est un capteur relatif qui possède des moyens pour repérer une position de référence acquise lors de la rotation du volant (4).

**6.** Système de détermination selon la revendication 5, **caractérisé en ce que** le calculateur (2) est raccordé à des moyens de mesure (7,9) des vitesses de rotation des roues arrières pour calculer la position angulaire du volant en fonction desdites vitesses de rotation des roues arrières (8,10) selon la relation suivante :

$$\alpha_{volant} = dem \times \arctan\left[\frac{2L}{E}\left(\frac{\omega_{2ext} - \omega_{2\,\mathrm{int}}}{\omega_{2ext} + \omega_{2\,\mathrm{int}}}\right)\right]$$

dans laquelle :

$\alpha_{volant}$ : position angulaire du volant, en radians
dem : rapport de démultiplication entre le volant et les roues directrices
L : empattement du véhicule, en mètres
E : voie du véhicule, en mètres
$\omega_{2ext}$ : vitesse de rotation de la roue arrière extérieure, en radians/seconde
$\omega_{2int}$ : vitesse de rotation de la roue arrière intérieure, en radians/seconde

**7.** Système de détermination selon la revendication 5 ou 6, **caractérisé en ce que** le capteur (3) relatif et un dispositif de serrage (5) de la colonne de direction (6) sont reliés au calculateur (2) par des moyens de communication (11,12) pour synchroniser l'activation et la désactivation du capteur (3) sur les trames de données émises par le dispositif de serrage (5) de la colonne de direction (6), et pour calculer le nombre relatif de tours effectués par le volant (4), à partir d'une trame de données transmise au calculateur (2) par le dispositif de serrage (5) de la colonne de direction (6).

**8.** Procédé de détermination de la position angulaire d'un volant (4) d'un véhicule automobile (1) mis en oeuvre au moyen d'un système selon la revendication 1, **caractérisé en ce que** l'on mesure la position angulaire du volant

(4) modulo 2II au moyen d'un capteur (3), on détermine le nombre relatif de tours effectués par le volant (4), et on calcule la position angulaire du volant (4) à partir de la position angulaire du volant (4) modulo 2Π et du nombre relatif de tours effectués par le volant (4).

**9.** Procédé de détermination selon la revendication 8, **caractérisé en ce que** l'on utilise un capteur (3) absolu monotour, et on synchronise l'activation et la désactivation du capteur (3) sur des trames de données émises par un dispositif de serrage (5) de la colonne de direction (6), lesdites trames circulant sur un moyen de communication (11) reliant ledit dispositif de serrage (5) au calculateur (2).

**10.** Procédé de détermination selon la revendication 9, **caractérisé en ce que** l'on détermine le nombre relatif de tours effectués par le volant (4) en exploitant une trame de données transmise au calculateur (2) par le dispositif de serrage (5) de la colonne de direction (6).

**11.** Procédé de détermination selon la revendication 10, **caractérisé en ce que**, en cas de verrouillage du dispositif de serrage (5) de la colonne de direction (6) après la désactivation du capteur (3), on détermine le numéro relatif du tour dans lequel se trouve le volant (4) à partir des vitesses de rotation des roues arrières (8,10) du véhicule fournies par les moyens de mesure (7,9) des vitesses de rotation des roues arrières.

**12.** Procédé de détermination selon la revendication 8, **caractérisé en ce que** l'on utilise un capteur (3) relatif, on repère une position de référence connue du capteur (3) relatif lors de la rotation du volant (4), et on synchronise l'activation et la désactivation du capteur (3) sur des trames de données émises par un dispositif de serrage (5) de la colonne de direction (6), lesdites trames circulant sur un moyen de communication (11) reliant ledit dispositif de serrage (5) au calculateur (2).

**13.** Procédé de détermination selon la revendication 12, **caractérisé en ce que** l'on détermine le nombre relatif de tours effectués par le volant (4) en exploitant une trame de données transmise au calculateur (2) par le dispositif de serrage (5) de la colonne de direction (6).

**14.** Procédé de détermination selon la revendication 13, **caractérisé en ce que**, en cas de verrouillage du dispositif de serrage (5) de la colonne de direction (6) après la désactivation du capteur (3), on détermine le numéro relatif du tour dans lequel se trouve le volant (4) au moyen des vitesses de rotation des roues arrières (8,10) du véhicule (1) fournies par les moyens de mesure (7,9) des vitesses de rotation des roues arrières.

**15.** Procédé de détermination selon la revendication 14, **caractérisé en ce que** l'on détermine une position de référence connue du capteur (3) lors d'une rotation du volant (4).

**16.** Procédé de détermination selon la revendication 15, **caractérisé en ce que**, en cas de défaut de détection de position de référence, on active un dispositif d'alerte.

FIG.1

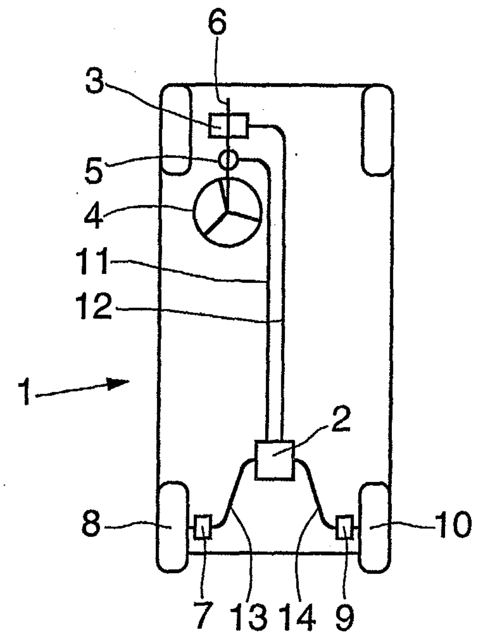


FIG.2

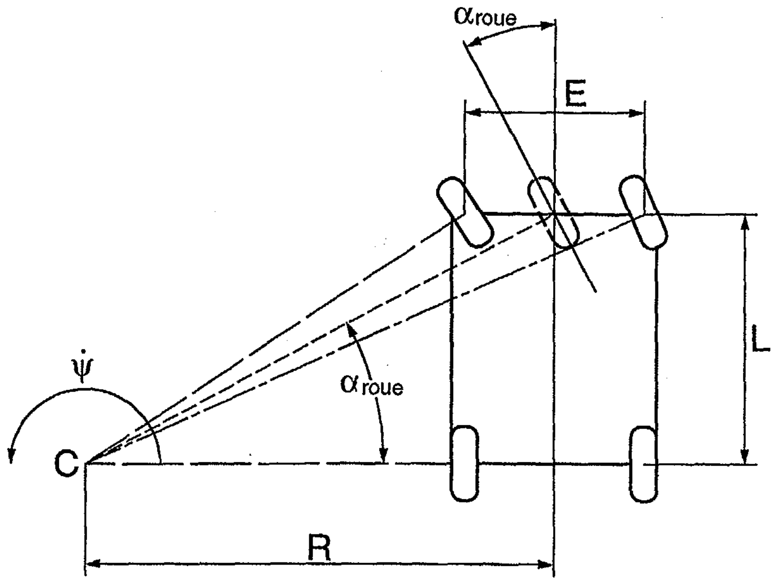

FIG.3

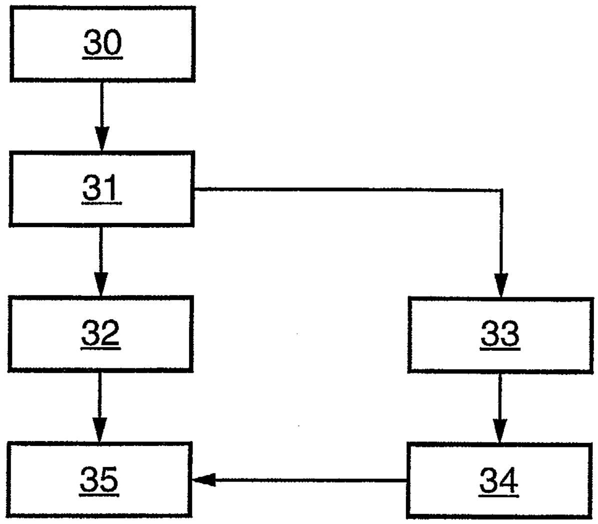


FIG.4

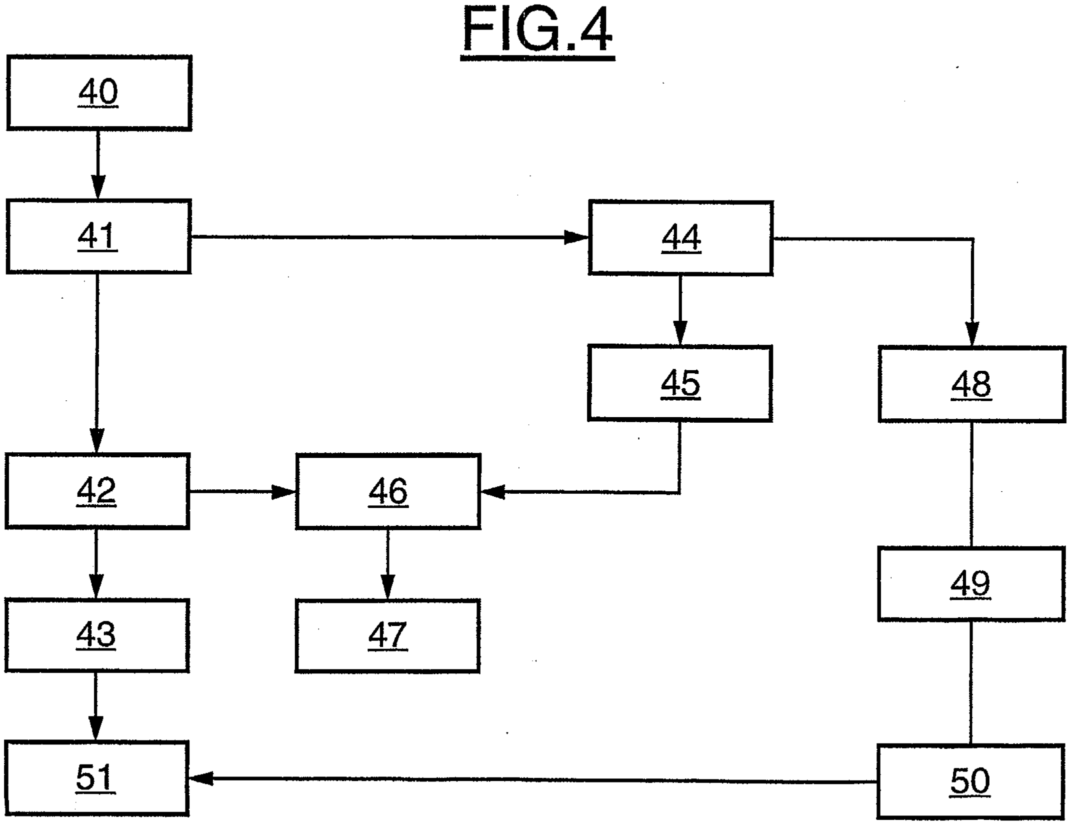

Office européen des brevets

# RAPPORT DE RECHERCHE EUROPEENNE

Numéro de la demande
EP 04 29 0519

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X<br><br>Y | FR 2 759 779 A (PEUGEOT)<br>21 août 1998 (1998-08-21)<br>* revendications * | 1,2<br><br>3 | B62D15/02<br>G01D18/00<br>G01D21/02 |
| X<br><br>Y | US 2002/022913 A1 (FONT JOACHIM)<br>21 février 2002 (2002-02-21)<br>* revendications * | 1,5<br><br>6 | |
| Y | EP 0 353 995 A (HONDA MOTOR CO LTD)<br>7 février 1990 (1990-02-07)<br>* le document en entier * | 3,6 | |
| Y | US 6 078 851 A (SUGITANI NOBUYOSHI)<br>20 juin 2000 (2000-06-20)<br>* colonne 2, ligne 53 - colonne 3, ligne 57 * | 3,6 | |
| A | US 5 893 429 A (DILGER WERNER ET AL)<br>13 avril 1999 (1999-04-13)<br>* abrégé * | 4,7,9-16 | |
| | | | **DOMAINES TECHNIQUES RECHERCHES (Int.Cl.7)** |
| | | | B62D<br>G01D |

Le présent rapport a été établi pour toutes les revendications

| Lieu de la recherche | Date d'achèvement de la recherche | Examinateur |
|---|---|---|
| La Haye | 5 juillet 2004 | Lloyd, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO. EP 04 29 0519

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-07-2004

| Document brevet cité au rapport de recherche | Date de publication | Membre(s) de la famille de brevet(s) | Date de publication |
|---|---|---|---|
| FR 2759779 A | 21-08-1998 | FR 2759779 A1 | 21-08-1998 |
| US 2002022913 A1 | 21-02-2002 | DE 10041507 A1 | 28-02-2002 |
| | | EP 1180665 A2 | 20-02-2002 |
| | | JP 2002139351 A | 17-05-2002 |
| EP 0353995 A | 07-02-1990 | JP 1947934 C | 10-07-1995 |
| | | JP 2040504 A | 09-02-1990 |
| | | JP 6071863 B | 14-09-1994 |
| | | JP 1947935 C | 10-07-1995 |
| | | JP 2041979 A | 13-02-1990 |
| | | JP 6071864 B | 14-09-1994 |
| | | CA 1326279 C | 18-01-1994 |
| | | DE 68912846 D1 | 17-03-1994 |
| | | DE 68912846 T2 | 28-07-1994 |
| | | EP 0353995 A2 | 07-02-1990 |
| | | US 5001637 A | 19-03-1991 |
| US 6078851 A | 20-06-2000 | JP 10253406 A | 25-09-1998 |
| US 5893429 A | 13-04-1999 | DE 19601827 A1 | 24-07-1997 |
| | | JP 9202250 A | 05-08-1997 |

EPO FORM P0460

Pour tout renseignement concernant cette annexe : voir Journal Officiel de l'Office européen des brevets, No.12/82